# FASCICULE DE BREVET EUROPEEN

(11) **EP 1 944 072 B1**
(45) Date de publication et mention de la délivrance du brevet: **22.07.2009**
(21) Numéro de dépôt: 08100366.7
(22) Date de dépôt: 11.01.2008
(51) Int. Cl.: B01D 29/96, B60H 3/06, B01D 46/00, B01D 46/52

(54) **Procédé de fabrication d'un dispositif de filtration d'air et dispositif fabriqué grâce à un tel procédé**
Herstellungsverfahren einer Vorrichtung zur Luftfilterung und nach einem solchen Verfahren hergestellte Vorrichtung
Method for manufacturing an air filtering device and device manufactured using such a method

(30) Priorité: 12.01.2007 FR 0752656
(43) Date de publication de la demande: 16.07.2008
(73) Titulaire: Valeo Matériaux de Friction, 87020 Limoges (FR)
(72) Inventeur: BIDOT, Johann, 14260, CAMPADRE VALCONGRAIN (FR); FIAULT, Anthony, 61100, FLERS (FR); GODIER, Sébastien, 14110, CONDE SUR NOIREAU (FR)

(56) Documents cités:
- EP-A- 1 552 872
- EP-A1- 1 275 428
- EP-A2- 0 891 801
- EP-A2- 0 995 474
- WO-A-02/26349
- DE-A1- 2 947 080
- DE-A1- 19 809 375
- GB-A- 2 420 083
- US-A- 3 187 489
- US-A- 5 603 747

## Description

La présente invention concerne un procédé de fabrication d'un dispositif de filtration d'air et un dispositif fabriqué grâce à un tel procédé.

Elle s'applique en particulier à la fabrication de dispositifs pour la filtration d'air circulant dans un véhicule automobile, notamment d'air climatisé ou non destiné à circuler dans l'habitacle du véhicule.

On connaît déjà, dans l'état de la technique, un procédé de fabrication d'un dispositif de filtration d'air, comprenant une étape d'assemblage d'un média filtrant avec une paroi de canalisation d'air.

Par exemple, on connaît un procédé de fabrication d'un dispositif comprenant un média filtrant s'étendant entre deux parois de canalisation d'air en mousse polypropylène. Le média filtrant est assemblé aux parois de canalisation au cours d'une étape d'assemblage, généralement une étape de soudage, telle que le soudage miroir, consistant à chauffer jusqu'à début de fusion des parties de liaison correspondantes du média filtrant et des parois puis à presser ces parties de liaison les unes contre les autres pour les souder entre elles.

Le soudage peut également être effectué par un rayonnement infra-rouge. Dans ce cas, au moins une face de jonction de chaque paroi est chauffée par une lampe émettant un rayonnement infra-rouge.

Dans le cas d'une installation de circulation d'air dans un véhicule automobile, le dispositif de filtration d'air, ainsi fabriqué, est logé dans un boîtier de canalisation d'air, agencé dans le corps du véhicule.

Lorsque ce dispositif de filtration d'air doit être remplacé, il est parfois difficile de l'extraire du boîtier dans lequel il est logé.

L'invention a notamment pour but de fabriquer un dispositif de filtration d'air plus facile à extraire d'un boîtier de logement, et cela sans complexifier notablement sa fabrication, et sans augmenter notablement son coût.

A cet effet, l'invention a pour objet un procédé de fabrication d'un dispositif de filtration d'air, comprenant une étape d'assemblage d'un média filtrant avec une paroi de canalisation d'air, **caractérisé en ce qu'**un élément de préhension du dispositif de filtration est assemblé entre le média filtrant et la paroi de canalisation d'air au cours de l'étape d'assemblage.

Un tel élément de préhension facilite la préhension, et donc l'extraction, du dispositif de filtration du boîtier dans lequel il est logé.

L'élément de préhension est ajouté au dispositif de filtration d'air sans complexifier le procédé de fabrication, puisque cet élément de préhension est assemblé entre le média filtrant et la paroi de canalisation au cours de l'opération préexistante d'assemblage de ce média filtrant à cette paroi de canalisation. En effet, il suffit d'insérer cet élément de préhension entre le média filtrant et la paroi de canalisation lors de leur assemblage pour que l'élément de préhension soit assemblé avec ce média filtrant et cette paroi.

II est ainsi possible de réaliser le procédé selon l'invention de manière simple, sans ajouter d'opération d'assemblage supplémentaire à un procédé classique, et donc sans augmenter son coût.

Un procédé de fabrication selon l'invention peut en outre comporter l'une ou plusieurs des caractéristiques suivantes.
- L'étape d'assemblage est choisie parmi une étape de soudage par infrarouges ou de soudage-miroir. L'assemblage par soudage est notamment une méthode simple, fiable et efficace pour assembler le média filtrant et la paroi de canalisation. Grâce à l'invention, l'élément de préhension est assemblé au dispositif de manière tout aussi simple, fiable et efficace.
- Le procédé comporte une étape de fabrication de l'élément de préhension, par découpage de cet élément de préhension dans une chute d'une bande de matériau ayant été utilisée pour la fabrication d'un média filtrant.

Le procédé selon l'invention permet de fabriquer un dispositif de filtration d'air, du type comprenant un média filtrant relié à une paroi de canalisation d'air, **caractérisé en ce qu'il** comprend au moins un élément de préhension du dispositif de filtration assemblé entre le média filtrant et la paroi de canalisation.

Un dispositif de filtration selon l'invention peut en outre comporter l'une ou plusieurs des caractéristiques suivantes.
- Le média filtrant est soudé à la paroi de canalisation, l'élément de préhension étant également soudé entre ce média filtrant et cette paroi de canalisation.
- L'élément de préhension est souple et pliable au moins à 90°. Ainsi, l'élément de préhension ne génère pas un encombrement supplémentaire du dispositif de filtration, car il peut être replié lorsque le dispositif est logé dans un boîtier de logement. De plus, le fait que cet élément de préhension soit souple permet de l'agencer indifféremment, pour sa préhension, dans une direction perpendiculaire ou parallèle à la paroi.
- Le média filtrant et l'élément de préhension sont formés dans un même matériau. L'élément de préhension peut notamment être fabriqué à partir de chutes générées lors de la fabrication d'un média filtrant.
- Le dispositif de filtration d'air comporte deux faces opposées de passage d'air, l'élément de préhension faisant saillie depuis le média filtrant dans une direction parallèle aux faces de passage d'air.
- Le dispositif de filtration d'air comporte deux faces opposées de passage d'air, l'élément de préhension faisant saillie depuis le média filtrant dans une direction perpendiculaire aux faces de passage d'air.
- Le dispositif de filtration d'air comporte au moins deux éléments de préhension assemblés entre le média filtrant et la paroi de canalisation.
- Le média filtrant s'étend entre deux parois de canalisation, le dispositif de filtration comportant au moins deux éléments de préhension, assemblés chacun entre le média filtrant et une paroi de canalisation respective.
- Chaque paroi est en mousse polypropylène, et le média filtrant est un filtre à gaz, un filtre à particules ou un filtre mixte.

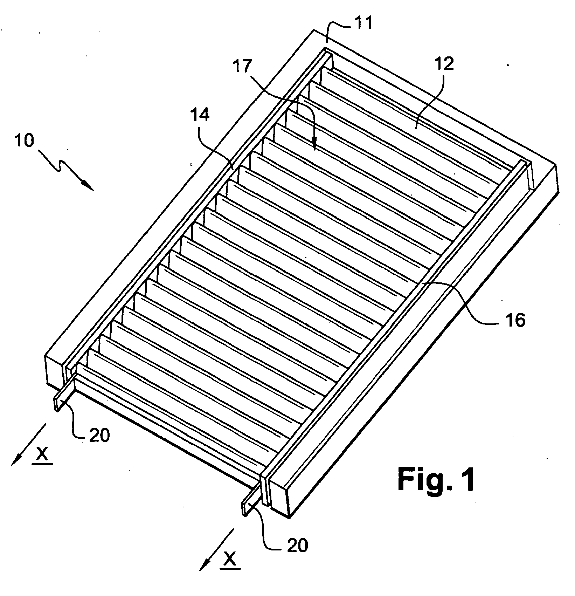

L'invention sera mieux comprise à la lecture de la description qui va suivre, donnée uniquement à titre d'exemple et faite en se référant aux dessins annexés dans lesquels les figures 1 à 3 sont des vues en perspective de dispositifs de filtration d'air selon des premier à troisième modes de réalisation de l'invention.

On a représenté sur la figure 1 un dispositif de filtration d'air selon un premier mode de réalisation de l'invention, désigné par la référence générale 10.

Le dispositif de filtration 10 est destiné par exemple à être agencé dans une installation de circulation d'air dans un véhicule automobile afin notamment d'approvisionner un habitacle de ce véhicule en air climatisé ou non.

Dans l'exemple de la figure 1, le dispositif de filtration 10 est logé dans un boîtier de logement 11 de forme générale parallélépipédique aplatie. Généralement, le dispositif de filtration 10 est inséré dans ce boîtier 11 par coulissement à travers une ouverture 11A d'accès à l'intérieur de ce boîtier.

Le dispositif de filtration 10 comprend un média filtrant 12, plié en accordéon, s'étendant entre deux parois planes 14, 16. Le média filtrant 12 est habituellement un filtre à gaz, un filtre à particules ou un filtre mixte, et les parois planes sont de préférence en mousse polypropylène.

Ces parois 14, 16, dites longitudinales, sont sensiblement parallèles et sont destinés notamment à la canalisation de l'air. Les parois 14, 16 s'étendent sensiblement perpendiculairement à la direction des lignes de pliage du média filtrant 12.

On notera que le média filtrant 12 et les parois 14, 16 s'étendent dans un volume de forme générale parallélépipédique aplatie complémentaire de celle du boîtier 11, les deux grandes faces opposées de ce volume délimitant respectivement des faces 17 de passage d'air d'entrée et de sortie.

Conformément au premier mode de réalisation, l'ouverture 11A d'accès au boîtier s'étend perpendiculairement aux parois 14, 16, en considérant le dispositif de filtration 10 dans le boîtier 11.

Afin de pouvoir extraire facilement le dispositif 10 du boîtier 11, ce dispositif 10 est muni, au moins à l'extrémité du média filtrant 12 accessible par l'ouverture 11A du boîtier 11, de deux éléments de préhension 20. Ces éléments de préhension 20 sont destinés à faciliter la préhension du dispositif 10 pour son extraction. Chacun de ces éléments de préhension 20 est assemblé entre le média filtrant 12 et une paroi longitudinale de canalisation respective 14, 16.

Par exemple, ces éléments de préhension sont des languettes souples, pliables à au moins 90° de façon à ne pas générer d'encombrement supplémentaire du dispositif de filtration. En effet, les éléments de préhension 20 peuvent ainsi être repliés sur le média filtrant 12 lorsque le dispositif 10 est logé dans le boîtier de logement 11.

Conformément au premier mode de réalisation, les éléments de préhension 20 font saillie du média filtrant 12 dans une direction longitudinale X parallèle aux faces 17 de passage d'air et aux parois longitudinales 14, 16.

Ainsi, le dispositif 10 peut être logé longitudinalement dans le boîtier de logement 11, et peut être extrait dans cette direction longitudinale X grâce aux éléments de préhension 20.

Lors de la fabrication du dispositif 10, les éléments de préhension 20 sont assemblés entre le média filtrant et la paroi de canalisation d'air correspondante au cours d'une étape d'assemblage de ce média filtrant avec cette paroi de canalisation d'air. Cette étape d'assemblage est de préférence une étape de soudage par infrarouges ou de soudage-miroir.

De préférence également, les éléments de préhension sont obtenus par découpage dans une chute d'une bande de matériau ayant été utilisée pour la fabrication d'un média filtrant. Ainsi, l'élément de préhension 20 est formé dans le même matériau que le média filtrant 12, et peut donc être soudé dans les mêmes conditions.

Le fait d'utiliser les chutes de la bande de matériau pour fabriquer les éléments de préhension, plutôt que de jeter ces chutes, permet de valoriser les chutes.

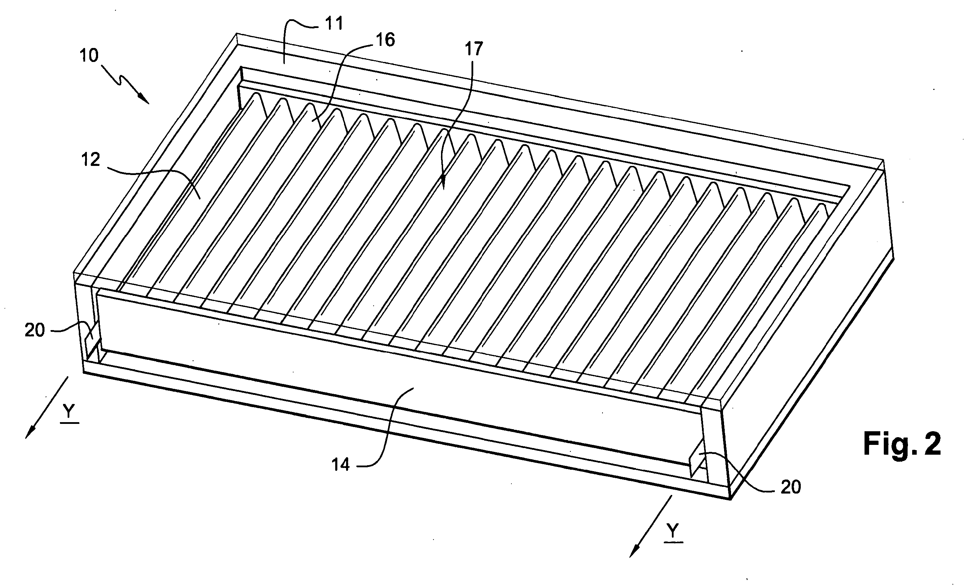

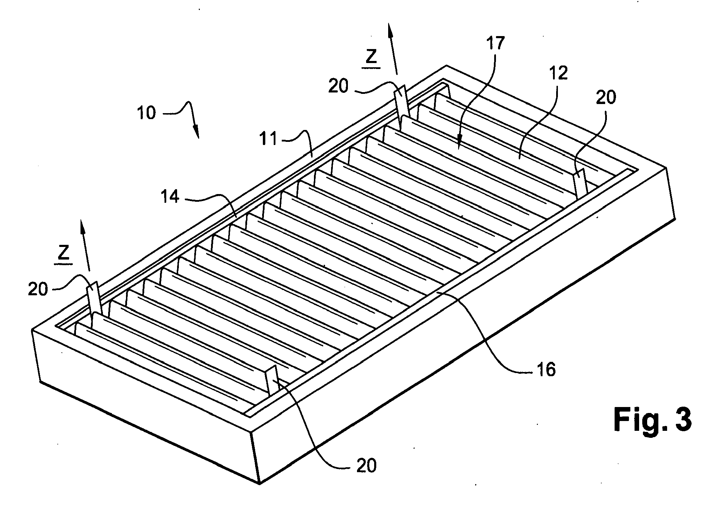

Sur les figures 2 et 3, les éléments analogues à ceux de la figure 1 sont désignés par des références identiques.

On a représenté sur la figure 2 un dispositif de filtration d'air 10 selon un deuxième mode de réalisation de l'invention.

Conformément à ce deuxième mode de réalisation, l'ouverture d'accès 11A s'étend parallèlement à une 14 des parois, en considérant le dispositif de filtration 10 dans le boîtier 11. Par ailleurs, le dispositif 10 comporte deux éléments de préhension 20, assemblées entre le média filtrant 12 et une même paroi longitudinale 14.

Ces éléments de préhension peuvent ensuite être repliés à 90°, perpendiculairement à la paroi longitudinale 14, de façon à faire saillie du média filtrant 12 dans une direction transversale Y perpendiculaire à cette paroi longitudinale 14 et parallèle aux faces 17 de passage d'air.

Ainsi, le dispositif 10 peut être logé transversalement dans le boîtier de logement 11, et peut être extrait dans cette direction transversale Y grâce aux éléments de préhension 20.

On a représenté sur la figure 3 un dispositif de filtration d'air 10 selon un troisième mode de réalisation de l'invention.

Conformément à ce troisième mode de réalisation, l'ouverture d'accès 11A forme une face de passage d'air 17. Par ailleurs, le dispositif 10 comporte quatre éléments de préhension 20, assemblés deux par deux entre le média filtrant 12 et une paroi longitudinale 14, 16 commune à deux éléments 20.

Ces éléments de préhension 20 font alors saillie du média filtrant 12 dans une direction Z perpendiculaire aux faces 17 de passage d'air.

Ainsi, le dispositif 10 peut être logé dans le boîtier de logement 11 et extrait de ce boîtier 11 par la face de passage d'air 17.

On notera enfin que l'invention n'est pas limitée aux modes de réalisation précédemment décrits, mais englobe toute variante reprenant, avec des moyens équivalents, ses caractéristiques essentielles.

Par exemple, le dispositif pourrait ne comporter qu'un élément de préhension, ou pourrait en comporter trois, quatre ou plus.

Conformément à une autre variante, le dispositif pourrait comporter plus de deux parois de canalisation d'air, par exemple quatre parois de canalisation, formant un cadre de canalisation d'air.

## Revendications

1. Procédé de fabrication d'un dispositif (10) de filtration d'air, comprenant une étape d'assemblage d'un média filtrant (12) avec une paroi de canalisation d'air (14, 16), **caractérisé en ce que**, au cours de l'étape d'assemblage, un élément (20) de préhension du dispositif de filtration est assemblé entre le média filtrant (12) et la paroi de canalisation d'air (14, 16), en faisant saillie du média filtrant.

2. Procédé de fabrication selon la revendication 1, dans lequel l'étape d'assemblage est choisie parmi une étape de soudage par infrarouges ou de soudage-miroir.

3. Procédé de fabrication selon la revendication 1 ou 2, comportant une étape de fabrication de l'élément de préhension (20), par découpage de cet élément de préhension (20) dans une chute d'une bande de matériau ayant été utilisée pour la fabrication d'un média filtrant.

4. Dispositif de filtration d'air (10), du type comprenant un média filtrant (12) relié à une paroi (14, 16) de canalisation d'air, **caractérisé en ce qu'**il comprend au moins un élément (20) de préhension du dispositif de filtration assemblé entre le média filtrant (12) et la paroi de canalisation (14, 16) et faisant saillie du média filtrant.

5. Dispositif de filtration d'air (10) selon la revendication 4, dans lequel le média filtrant (12) est soudé à la paroi de canalisation (14, 16), l'élément de préhension (20) étant également soudé entre ce média filtrant (12) et cette paroi de canalisation (14, 16).

6. Dispositif de filtration d'air (10) selon la revendication 4 ou 5, dans lequel l'élément de préhension (20) est souple et pliable au moins à 90°.

7. Dispositif de filtration d'air (10) selon l'une quelconque des revendications 4 à 6, dans lequel le média filtrant (12) et l'élément de préhension (20) sont formés dans un même matériau.

8. Dispositif de filtration d'air (10) selon l'une quelconque des revendications 4 à 7, comportant deux faces (17) opposées de passage d'air, l'élément de préhension (20) faisant saillie depuis le média filtrant (12) dans une direction parallèle aux faces (17) de passage d'air.

9. Dispositif de filtration d'air (10) selon l'une quelconque des revendications 4 à 7, comportant deux faces (17) opposées de passage d'air, l'élément de préhension (20) faisant saillie depuis le média filtrant (12) dans une direction perpendiculaire aux faces (17) de passage d'air.

10. Dispositif de filtration d'air (10) selon l'une quelconque des revendications 4 à 9, comportant au moins deux éléments de préhension (20) assemblés entre le média filtrant (12) et la paroi de canalisation (14, 16).

11. Dispositif de filtration d'air (10) selon l'une quelconque des revendications 4 à 10, dans lequel le média filtrant (12) s'étend entre deux parois de canalisation (14, 16), le dispositif de filtration (10) comportant au moins deux éléments de préhension (20), assemblés chacun entre le média filtrant (12) et une paroi de canalisation respective (14, 16).

12. Dispositif de filtration d'air (10) selon l'une quelconque des revendications 4 à 11, dans lequel chaque paroi (14, 16) est en mousse polypropylène, et dans lequel le média filtrant (12) est un filtre à gaz, un filtre à particules, ou un filtre mixte.

## Claims

1. Method for production of a device (10) for filtering of air, comprising a step of assembly of a filtering medium (12) with an air-channelling wall (14, 16), **characterised in that**, during the assembly step, an element (20) for grasping the filtering device is assembled between the filtering medium (12) and the air-channelling wall (14, 16), and projects from the filtering medium.

2. Production method according to claim 1, wherein the assembly step is selected from amongst a step of infrared welding or mirror welding.

3. Production method according to claim 1 or 2, comprising a step of production of the grasping element (20), by cutting out this grasping element (20) from scrap from a strip of material which has been used for production of a filtering medium.

4. Air filtering device (10), of the type comprising a filtering medium (12) which is connected to a wall (14, 16) for channelling of air, **characterised in that** it comprises at least one element (20) for grasping the filtering device which is assembled between the filtering medium (12) and the channelling wall (14, 16), and projects from the filtering medium.

5. Air filtering device (10) according to claim 4, wherein the filtering medium (12) is welded to the channelling wall (14, 16), the grasping element (20) also being welded between this filtering medium (12) and this channelling wall (14, 16).

6. Air filtering device (10) according to claim 4 or 5, wherein the grasping element (20) is flexible and can be bent by at least 90°.

7. Air filtering device (10) according to any one of claims 4 to 6, wherein the filtering medium (12) and the grasping element (20) are formed from the same material.

8. Air filtering device (10) according to any one of claims 4 to 7, comprising two opposite surfaces (17) for passage of air, the grasping element (20) projecting from the filtering medium (12) in a direction which is parallel to the surfaces (17) for passage of air.

9. Air filtering device (10) according to any one of claims 4 to 7, comprising two opposite surfaces (17) for passage of air, the grasping element (20) projecting from the filtering medium (12) in a direction which is perpendicular to the surfaces (17) for passage of air.

10. Air filtering device (10) according to any one of claims 4 to 9, comprising at least two grasping elements (20) which are assembled between the filtering medium (12) and the channelling wall (14, 16).

11. Air filtering device (10) according to any one of claims 4 to 10, wherein the filtering medium (12) extends between two channelling walls (14, 16), the filtering device (10) comprising at least two grasping elements (20) which are each assembled between the filtering medium (12) and a respective channelling wall (14, 16).

12. Air filtering device (10) according to any one of claims 4 to 11, wherein each wall (14, 16) is made of polypropylene foam, and wherein the filtering medium (12) is a gas filter, a particle filter, or a combined filter.

## Patentansprüche

1. Verfahren zur Herstellung einer Luftfiltervorrichtung (10), das einen Verfahrensschritt zur Zusammenfügung eines Filtermediums (12) mit einer Luftkanalisierungswand (14, 16) umfasst, **dadurch gekennzeichnet, dass** im Verlauf des Verfahrensschritts zur Zusammenfügung ein Greifelement (20) zum Greifen der Filtervorrichtung zwischen dem Filtermedium (12) und der Luftkanalisierungswand (14, 16) eingefügt wird, wobei es von dem Filtermedium aus vorsteht.

2. Herstellungsverfahren nach Anspruch 1, bei dem der Verfahrensschritt zur Zusammenfügung aus einem Infrarotschweißvorgang oder einem Spiegelschweißvorgang ausgewählt wird.

3. Herstellungsverfahren nach Anspruch 1 oder 2, das einen Verfahrensschritt zur Herstellung des Greifelements (20) durch Ausschneiden dieses Greifelements (20) aus einem Abfallstück eines Materialstreifens umfasst, der zur Herstellung des Filtermediums verwendet wurde.

4. Luftfiltervorrichtung (10) mit einem Filtermedium (12), das mit einer Luftkanalisierungswand (14, 16) verbunden ist, **dadurch gekennzeichnet, dass** sie wenigstens ein Greifelement (20) zum Greifen der Filtervorrichtung umfasst, das zwischen dem Filtermedium (12) und der Kanalisierungswand (14, 16) eingefügt ist und von dem Filtermedium aus vorsteht.

5. Luftfiltervorrichtung (10) nach Anspruch 4, bei der das Filtermedium (12) an der Kanalisierungswand (14, 16) angeschweißt ist, wobei das Greifelement (20) zwischen diesem Filtermedium (12) und dieser Kanalisierungswand (14, 16) ebenfalls angeschweißt ist.

6. Luftfiltervorrichtung (10) nach Anspruch 4 oder 5, bei der das Greifelement (20) biegsam und um mindestens 90° biegbar ist.

7. Luftfiltervorrichtung (10) nach einem der Ansprüche 4 bis 6, bei der das Filtermedium (12) und das Greifelement (20) aus dem gleichen Werkstoff ausgebildet sind.

8. Luftfiltervorrichtung (10) nach einem der Ansprüche 4 bis 7, die zwei gegenüberliegende Luftdurchlassflächen (17) umfasst, wobei das Greifelement (20) vom Filtermedium (12) aus in einer zu den Luftdurchlassflächen (17) parallelen Richtung vorsteht.

9. Luftfiltervorrichtung (10) nach einem der Ansprüche 4 bis 7, die zwei gegenüberliegende Luftdurchlassflächen (17) umfasst, wobei das Greifelement (20) vom Filtermedium (12) aus in einer zu den Luftdurchlassflächen (17) senkrechten Richtung vorsteht.

10. Luftfiltervorrichtung (10) nach einem der Ansprüche 4 bis 9, die wenigstens zwei Greifelemente (20) umfasst, die zwischen dem Filtermedium (12) und der Kanalisierungswand (14, 16) eingefügt sind.

11. Luftfiltervorrichtung (10) nach einem der Ansprüche 4 bis 10, bei der sich das Filtermedium (12) zwischen zwei Kanalisierungswänden (14, 16) erstreckt, wobei die Filtervorrichtung (10) wenigstens zwei Greifelemente (20) umfasst, die jeweils zwischen dem Filtermedium (12) und einer zugehörigen Kanalisierungswand (14, 16) eingefügt sind.

12. Luftfiltervorrichtung (10) nach einem der Ansprüche 4 bis 11, bei der jede Wand (14, 16) aus Polypropylenschaum besteht und bei der das Filtermedium (12) ein Gasfilter, ein Partikelfilter oder ein Kombinationsfilter ist.
